# EUROPÄISCHE PATENTANMELDUNG

(11) **EP 0 830 978 A1**
(43) Veröffentlichungstag der Anmeldung: **25.03.1998**
(21) Anmeldenummer: 97116125.2
(22) Anmeldetag: 17.09.1997
(51) Int. Cl.: B60P 7/08

(54) **Sicherungselement oder Stopper zur Sicherung von Gegenständen**

(30) Priorität: 20.09.1996 DE 29616389 U
(71) Anmelder: Schiegl, Ludwig, 93086 Wörth a.d. Donau (DE)
(72) Erfinder: Schiegl, Ludwig, 93086 Wörth a.d. Donau (DE)
(74) Vertreter: Wasmeier, Alfons, Dipl.-Ing.

(57) **Zusammenfassung**

Bei einem Sicherungselement (3) oder Stopper zur Sicherung von Gegenständen (2) auf Abstellflächen (1) gegen Verrutschen, insbesondere auf Ladeflächen von Fahrzeugen, ist der Stopper (3) als Winkelstück mit zwei einen Winkel miteinander einschließenden Schenkeln hergestellt, von denen ein erster Schenkel zwischen der Unterseite des zu sichernden Gegenstandes und der Abstellfläche angeordnet wird und der zweite Schenkel eine seitliche Anlagefläche für den Gegenstand bildet, und bei der der erste Schenkel an seiner dem zweiten Schenkel abgewandten Unterseite zumindest in einem Teilbereich aufgerauht hergestellt ist.

## Beschreibung

Die Erfindung bezieht sich auf einen Stopper zur Sicherung von Gegenständen auf einer Auflagefläche gegen unerwünschtes Verrutschen, und dabei insbesondere auf einen Stopper zur Verwendung bei Fahrzeugen zur Sicherung von Gegenständen auf der Ladefläche.

Aufgabe der Erfindung ist es, einen Stopper aufzuzeigen, der bei einfacher Formgebung eine wirksame Sicherung insbesondere auch von Gegenständen auf einer Ladefläche, beispielsweise im Kofferraum eines PKW- oder Kombi-Fahrzeugs ermöglicht. Zur Lösung dieser Aufgabe ist ein Stopper entsprechend dem kennzeichnenden Teil des Schutzanspruches 1 ausgebildet.

Der erfindungsgemäße Stopper kann aus Kunststoff preiswert gefertigt werden. Er wird so verwendet, daß die ersten Schenkel zwischen dem zu sichernden Gegenstand und der Auflagefläche (insbesondere Ladefläche eines PKW- oder Kombi-Fahrzeugs) angeordnet und durch das Gewicht des Gegenstandes gegen diese Auflagefläche angedrückt ist. An der Unterseite ist dieser erste Schenkel aufgerauht, so daß ein Verrutschen des Stoppers entlang der Auflagefläche praktisch nicht möglich ist. Der zweite, vom ersten nach oben wegstehende Schenke bildet dann eine seitliche Anlagefläche für den zu sichernden Gegenstand.

Bei einer besonderen Ausführungsform der Erfindung sind Verbindungsmittel am Stopper vorgesehen, und zwar derart, daß mehrere derartige Stopper gelenkig bzw. kettenartig miteinander verbunden werden können, so daß Gegenstände insbesondere auch an Eckbereichen mit zwei verbundenen Stoppern gesichert werden können.

Weiterbildungen sind Gegenstand der Unteransprüche.

Die Erfindung wird im Folgenden anhand der Figuren an einem Ausführungsbeispiel näher erläutert. Es zeigen:

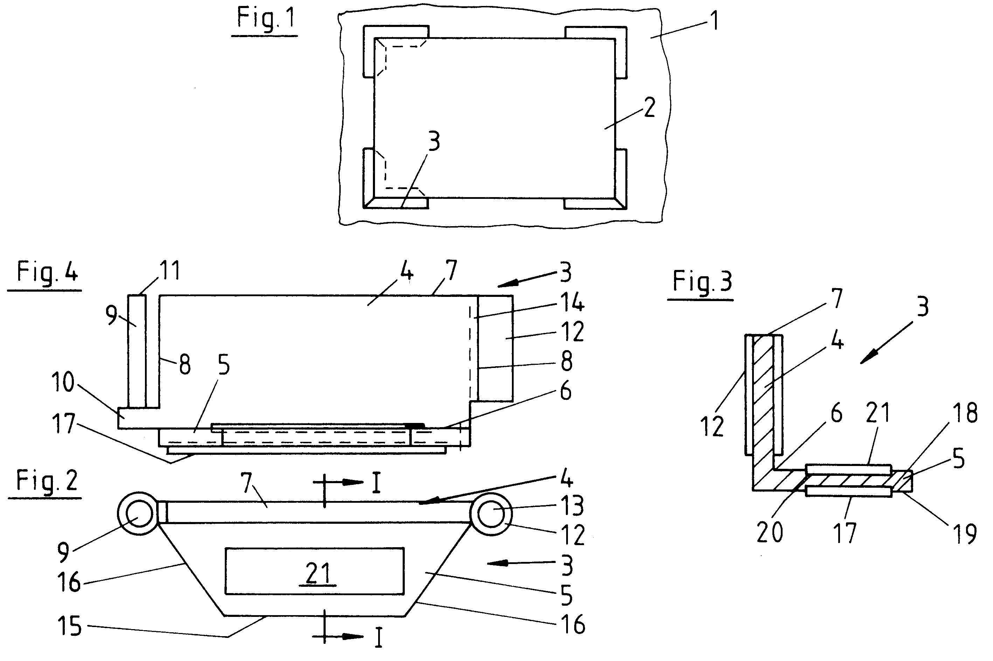

- Fig. 1: in sehr vereinfachter Darstellung und in Draufsicht einen auf einer Ladefläche, beispielsweise eines PKW bzw. Kombi-Fahrzeugs abgestellten Gegenstand, zusammen mit mehreren am Umfang des Gegenstandes vorgesehenen Fixier-Elementen oder Stoppern gemäß der Erfindung;
- Fig. 2: einen der Stopper in Draufsicht:
- Fig. 3: einen Schnitt entsprechend der Linie I - I der Figur 2;
- Fig. 4: den Stopper in Frontansicht.

In den Figuren ist 1 die Ladefläche eines Fahrzeugs, beispielsweise die Fläche des Kofferraums eines PKW- oder Kombi-Fahrzeugs. Auf dieser Ladefläche, die beispielsweise von einem filzartigen Material gebildet ist, befindet sich ein zu transportierender Gegenstand, beispielsweise ein Behälter, eine Verpackung, ein Koffer usw.. Damit der Gegenstand 2 beim Bremsen oder Beschleunigen des Fahrzeugs nicht verrutscht, sind mehrere Fixierelemente oder Stopper 3 vorgesehen. Jeder Stopper 3 ist aus Kunststoff hergestellt, und zwar winkelprofilartig mit zwei einen rechten Winkel miteinander einschließenden Schenkeln 4 und 5. Der eine Schenkel 4 besitzt eine im wesentlichen rechteckförmige Formgebung, wobei eine Längsseite 6 dieses Schenkels 4 die Winkelecke zwischen den Schenkeln 4 und 5 bildet und die andere Längsseite 7 parallel zu dieser Winkelecke verläuft. An einer der beiden senkrecht zu den Längsseiten 6 und 7 verlaufenden Schmalseite 8 ist ein Zapfen 9 vorgesehen, der mit seiner Achse parallel zu dieser Schmalseite und von ihr beabstandet angeordnet ist. Der Zapfen 9, der auch in der Ebene des Schenkels 4 liegt, ist mit seinem in der Figur 4 unteren, dem Schenkel 5 näherliegenden Ende über einen Materialabschnitt 10 mit dem Schenke 4 einstückig verbunden. Das obere, freie Ende 11 des Zapfens 9 reicht bis an das Niveau der Längsseite 7. An der anderen, ebenfalls zu den Längsseiten 6 und 7 verlaufenden Schmalseite 8 des Schenkels 4 ist eine Gelenkhülse 12 mit einer Bohrung 13 angeformt. Die Achse dieser Bohrung 13 liegt parallel zu dem Abstand von der Schmalseite 8. Die Gelenkhülse 12 ist über einen Materialsteg 14 mit dem Schenkel 4 einstückig verbunden.

Der Schenkel 5 ist bei der dargestellten Ausführungsform trapezartig ausgebildet, und zwar mit einer Seite 15, die parallel zu der Längsseite 6 bzw. zur Winkelecke liegt und mit zwei schräg verlaufenden Trapez- oder Schmalseiten 16, die jeweils mit der Winkelecke einen Winkel von 45° einschließen, welcher sich zur Mitte des Schenkels 5 hin öffnet. Die Verlängerung jeder Schmalseite 16 schneidet die Achse des Zapfens 9 bzw. der Bohrung 13.

Über jeweils einen Zapfen 9 und eine auf diesen Zapfen aufgeschobene Gelenkhülse 12 können zwei oder aber auch mehrere Stopper 3 miteinander kettenartig verbunden werden. Durch den schrägen Verlauf der Schmalseiten 16 können weiterhin zwei über einen Zapfen 9 und eine Gelenkhülse 12 miteinander verbundene Stopper in einen Winkel, beispielsweise in einem rechten Winkel zueinander angeordnet werden, und zwar derart, daß die Schenkel 4 dieser Stopper, die über die von dem Zapfen 9 und von der Gelenkhülse 12 gebildete Gelenkstelle verbunden sind, einen Winkel, beispielsweise einen Winkel von 90° mit einander einschließen und die beiden Schenkel 5 an benachbarten Schmalseiten 16 aneinander anschließen und in einer gemeinsamen Ebene angeordnet sind.

An der dem Schenkel 4 abgewandten Unterseite ist jeder Schenkel 5 mit einem Zuschnitt 17 aus einem Klettenmaterial oder Haftband versehen, welches eine Vielzahl von widerhakenartigen bzw. nadelartigen Vorsprüngen bildet und für Klettverschlüsse verwendet wird. Bei der dargestellten Ausführungsform ist der Zuschnitt 17 auf die Unterseite des jeweiligen Schenkels 5 aufgeklebt, und zwar am Boden einer dort eingeformten Vertiefung 18. Weiterhin weist bei der dargestellten Ausführungsform der Zuschnitt 17 ebenfalls eine Trapezform auf, und zwar in der Weise, daß an der Unterseite ein den Zuschnitt 17 und die Öffnung 18 umgebender Rand 19 gebildet ist. An der den, Schenkel 4 zugewandten Oberseite ist der Schenkel 5 mit einer weiteren Vertiefung 20 versehen, in der ein Zuschnitt 21 aus einem Filz oder Flauschband oder einem anderen weichen Material eingeklebt ist, der u.a. auch eine schonende Anlage für den Gegenstand 2 bildet.

Die einzelnen Stopper 3 werden zum Fixieren des Gegenstandes 2 derart verwendet, daß der jeweilige Schenkel 5 zwischen der Unterseite des Gegenstandes 2 und der Ladefläche 1 eingeordnet ist, so daß der jeweilige Zuschnitt 17 auf der Ladefläche 1 aufliegt. Mit seinem Rand liegt der Gegenstand 2 dann jeweils gegen den Schenkel 4 an. Zwei oder auch mehr als zwei miteinander verbundene Stopper 3 können an den Ecken des Gegenstandes 2 vorgesehen werden. Weiterhin ist es insbesondere bei Gegenständen 2 mit besonders großer Masse möglich, mehrere, gelenkkettenartig miteinander verbundene Stopper 3 zu verwenden. Ist die Oberfläche der Ladefläche 1 von einem filzartigen Material gebildet, so ergibt sich durch den jeweiligen Zuschnitt 17 eine besonders feste Verankerung.

Zur Lagerung können die Stopper 3 voneinander getrennt besonders platzsparend ineinander gestapelt werden. Die dabei aneinander anliegenden Zuschnitte 17 und 21 bilden jeweils einen Klettverschluß, mit dem die für die Aufbewahrung ineinander gestapelte Stopper 3 aneinander gehalten sind, wodurch sich eine besonders praktische Art der Aufbewahrung im Nichtverwendungsfall ergibt.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Laderfläche
- 2: Gegenstand
- 3: Stopper
- 4, 5: Schenkel
- 6, 7: Längsseite
- 8: Schmalseite
- 9: Zapfen
- 10: Verbindung
- 11: Ende
- 12: Gelenkhülse
- 13: Bohrung
- 14: Materialabschnitt
- 15: Längsseite
- 16: Schmalseite
- 17: Zuschnitt
- 18: Vertiefung
- 19: Rand
- 20: Vertiefung
- 21: Zuschnitt

## Patentansprüche

1. Sicherungselement oder Stopper zur Sicherung von Gegenständen (2) auf Abstellflächen gegen Verrutschen, insbesondere auf Ladeflächen (1) von Fahrzeugen, **dadurch gekennzeichnet**, daß der Stopper (3) als Winkelstück mit zwei einen Winkel miteinander einschließenden Schenkeln (4, 5) hergestellt ist, von denen ein erster Schenkel (5) zwischen der Unterseite des zu sichernden Gegenstandes (2) und der Abstellfläche (1) angeordnet wird und der zweite Schenkel (4) eine seitliche Anlagefläche für den Gegenstand (2) bildet, und daß der erste Schenkel (5) an seiner dem zweiten Schenkel (4) abgewandten Unterseite zumindest in einem Teilbereich aufgerauht (17) hergestellt ist.

2. Stopper nach Anspruch 1, dadurch gekennzeichnet, daß der erste Schenkel (5) an seiner Unterseite zumindest in einem Teilbereich mit einer Vielzahl von widerhaken- oder nadelartig wirkenden Elementen versehen ist.

3. Stopper nach Anspruch 2, dadurch gekennzeichnet, daß der erste Schenkel (5) an seiner Unterseite mit einem Zuschnitt (17) aus einem Haftband eines Klettverschlusses versehen ist.

4. Stopper nach einem der vorhergehenden Ansprüche, dadurch gekennzeichnet, daß der erste Schenkel (5) an seiner Oberseite wenigstens eine, von einem Zuschnitt aus einem weichen Material, beispielsweise von einem Zuschnitt (21) aus einem Flauschband oder einem Filz gebildete Anlagefläche aufweist.

5. Stopper nach einem der vorhergehenden Ansprüche, gekennzeichnet durch Verbindungselemente (9, 12), mit denen wenigstens zwei Stopper (3) gelenkig miteinander verbindbar sind.

6. Stopper nach Anspruch 5, dadurch gekennzeichnet, daß die Verbindungselemente von einem Zapfen (9) sowie von einer auf den Zapfen aufschiebbaren Gelenkhülse (12) gebildet sind.

7. Stopper nach einem der vorhergehenden Ansprüche, dadurch gekennzeichnet, daß an zwei gegenüberliegenden Schmalseiten (8) des zweiten Schenkels (4) ein Zapfen (9) bzw. eine Gelenkhülse (12) vorgesehen sind.

8. Stopper nach einem der vorhergehenden Ansprüche, dadurch gekennzeichnet, daß der erste Schenkel (5) trapezartig mit zwei schräg verlaufenden Schmalseiten (16) ausgeführt ist.

9. Stopper nach einem der vorhergehenden Ansprüche, dadurch gekennzeichnet, daß er mit seinen Schenkeln und den Verbindungselementen einstückig aus Kunststoff gefertigt ist.
